# NOUVEAU FASCICULE DE BREVET EUROPEEN

(11) **EP 3 137 318 B2**
(45) Date de publication et mention de la décision concernant l'opposition: **10.09.2025**
(45) Mention de la délivrance du brevet: 29.07.2020
(21) Numéro de dépôt: 15720316.7
(22) Date de dépôt: 28.04.2015
(51) Int. Cl.: B60C 13/00

(54) **PNEUMATIQUE COMPORTANT UN SYMBOLE MATRICIEL A FORT CONTRASTE SUR LE FLANC**
REIFEN MIT KONTRASTREICHEM MATRIZENSYMBOL AUF DER SEITENWAND
TYRE COMPRISING A HIGH-CONTRAST MATRIX SYMBOL ON THE SIDEWALL THEREOF

(30) Priorité: 30.04.2014 FR 1453987
(43) Date de publication de la demande: 08.03.2017
(60) Demande divisionnaire: 20179537.4
(73) Titulaire: Compagnie Générale des Etablissements Michelin, 63000 Clermont-Ferrand (FR)
(72) Inventeur: MUHLHOFF, Olivier, 63040 Clermont-Ferrand Cedex 9 (FR); DESVIGNES, Jean-Claude, 63040 Clermont-Ferrand Cedex 9 (FR)
(74) Mandataire: M.F.P. Michelin
(86) Numéro de dépôt international: PCT/EP2015/059122
(87) Numéro de publication internationale: WO 2015/165863

(56) Documents cités:
- EP-A1- 0 522 781
- EP-A1- 2 905 125
- WO-A1-2005/000714
- WO-A1-2011/036061
- WO-A1-2015/058872
- FR-A1- 2 995 254
- JP-A- 2005 164 655
- JP-A- 2007 320 172
- JP-A- 2012 224 194
- JP-A- H0 596 914
- US-A- 4 625 101
- US-A1- 2009 218 019
- US-A1- 2013 068 363

## Description

### DOMAINE DE L'INVENTION

La présente invention concerne un pneumatique en matériau caoutchoutique comportant un flanc.

### ETAT DE LA TECHNIQUE

Il est connu du document EP1636117/WO2005000714 d'utiliser un symbole matriciel codé sur le flanc d'un pneumatique, ledit symbole matriciel codé comportant des informations telles qu'un numéro de série individuel pour ledit pneumatique, le site internet du constructeur du pneumatique, etc. Un symbole matriciel codé comporte des parties sombres et des parties claires et est gravé ici directement sur le flanc du pneumatique.

Le document FR2995254 divulgue un pneumatique comportant un motif à fort contraste comprenant une pluralité de cavités.

Le document EP2905125 relève de l'article 54(3) et divulgue un procédé de fabrication d'un symbole matriciel codé sur un pneumatique.

Le document US2013068363 divulgue un pneumatique avec un flanc présentant une faible rugosité.

Le document US4625101 divulgue un pneumatique comportant un code à bar directement moulé sur le flanc d'un pneumatique.

Il existe aujourd'hui un besoin pour améliorer la lisibilité des symboles matriciels codés présents sur les flancs de pneumatique en vue d'améliorer leur lecture.

### DEFINITIONS

Par « pneumatique », on entend tous les types de bandages élastiques soumis à une pression interne ou non.
Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).
Par « symbole matriciel codé », on entend un code dit « intelligent » où les données sont encodées en deux dimensions (sous la forme d'une pluralité de rangées et de colonnes), les données étant décodables par un imageur d'une machine, tel qu'un téléphone portable. Un symbole matriciel codé encode un volume nettement plus important de données pour une même surface donnée qu'un code barre linéaire traditionnel et comporte un système intégré de correction d'erreurs.
Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule.
Par « flanc » d'un pneumatique, on entend une surface latérale du pneumatique disposée entre la bande de roulement du pneumatique et un bourrelet de ce pneumatique.
Par « texture », on entend un agencement organisé d'une pluralité d'éléments, tout ou partie des éléments de l'agencement étant la répétition d'un même élément de base, par exemple, un brin ou une lamelle.
Par « brin », on entend un élément filiforme dont la hauteur est au moins égale à 2 fois le diamètre d'un disque de même surface que la section moyenne du brin.
Par « lamelles », on entend des brins allongés qui présentent une longueur au moins égale à deux fois leur hauteur.
Par « texture venue de matière avec un flanc », on entend que la texture est dans le même matériau caoutchoutique que le flanc du pneumatique. On obtient ainsi une texture sans ajout d'un autre matériau.

### RESUME DE L'INVENTION

L'invention concerne un pneumatique en matériau caoutchoutique comprenant un flanc. Le flanc comporte un symbole matriciel codé, ledit symbole matriciel codé comprenant des parties sombres et des parties claires, les parties sombres étant composées d'une texture venue de matière avec ledit flanc et faisant contraste avec le reste du pneumatique. La texture est un agencement organisé d'une pluralité d'éléments. La texture comporte une pluralité de premiers éléments en creux par rapport à la surface du flanc. Les premiers éléments en creux forment des ouvertures sur la surface du flanc et la texture comprend une pluralité d'ouvertures, ces ouvertures étant réparties dans la texture selon une densité au moins égale à une ouverture par millimètre carré (mm²), ces ouvertures présentant des diamètres équivalents compris entre 0,01 mm et 1,2 mm.

L'invention permet d'obtenir des parties sombres du symbole matriciel codé fortement en contraste par rapport aux parties claires de ce symbole. La lecture du symbole matriciel codé est ainsi améliorée. En outre, une telle texture venue de matière peut-être réalisée en même temps que la cuisson du pneumatique dans le moule, ce qui rend plus économique la fabrication du symbole matriciel.

Selon des modes de réalisation non limitatifs, le pneumatique, peut comporter en outre une ou plusieurs caractéristiques supplémentaires parmi les suivantes.

Dans un mode de réalisation non limitatif, le symbole matriciel codé est un symbole sélectionné parmi un ensemble de symboles comportant :
- un QR code.

La texture permet de « piéger » tout ou partie des rayons lumineux incidents qui rencontrent le symbole matriciel codé. Ceci permet de donner un aspect plus noir aux parties sombres du symbole matriciel codé et en conséquence cela permet d'améliorer le contraste et donc leur visibilité par rapport aux parties claires et au reste du flanc. D'autre part, cette texture particulière permet d'obtenir un toucher agréable au niveau du symbole matriciel codé, de type « velours ».

La texture présente ainsi une plus grande pérennité. En effet, comme cette texture est composée d'éléments en creux par rapport à la surface du flanc, l'impact de frottements d'une chaussée sur cette texture est plus faible.

Selon l'invention, les parties claires du symbole matriciel codé sont composées d'un motif comprenant une pluralité de deuxièmes éléments en creux et/ou en bosse, chaque élément en creux/bosse ayant la forme d'une partie de sphère.

Les rayons lumineux provenant d'une même source lumineuse qui éclairent le flanc du pneumatique sont ainsi sensiblement déviés de la même manière sur le motif.

Dans un mode de réalisation non limitatif, les deuxièmes éléments en creux se raccordent entre eux au niveau de zones de raccordement qui s'étendent au-dessus de la surface moyenne du flanc.

Cela permet de constituer des éléments de protection des parties claires contre des phénomènes de frottements, issus par exemple de râpages trottoirs.

Dans un mode de réalisation non limitatif, vue en coupe, tout ou partie des deuxièmes éléments en creux/en bosse comporte une ouverture angulaire inférieure ou égale à 70°.

Cela permet d'obtenir une meilleure surface de réflexion pour la lumière. Les parties claires apparaissent ainsi plus clairement sur le flanc du pneumatique.

Dans un mode de réalisation non limitatif, dans le motif, un deuxième élément en creux est positionné en alternance avec un élément en bosse, les parties claires du symbole matriciel codé présentant dans cette alternance une variation de courbure de type cosinus ou sinus.

Les rayons lumineux provenant d'une même source lumineuse qui éclairent le flanc du pneumatique sont ainsi sensiblement déviés de la même manière sur le motif.

Dans un mode de réalisation non limitatif, les parties claires du symbole matriciel codé comportent une rugosité de surface de paramètre Ra inférieur à 30 µm.

Cela permet d'obtenir une surface proche d'une surface polie et ainsi de limiter la dispersion de la lumière.

Dans un mode de réalisation non limitatif, le symbole matriciel codé est entouré d'une zone de texture d'au moins 2 mm de largeur venue de matière avec le flanc et faisant contraste avec le reste du pneumatique.

Cela augmente le contraste entre les parties sombres et les parties claires du symbole matriciel codé. La lecture du symbole est en conséquence améliorée.

Dans un mode de réalisation non limitatif, le symbole matriciel codé suit une courbure du flanc du pneumatique.

Cela améliore l'esthétique du symbole matriciel codé sur le flanc du pneumatique.

Dans un mode de réalisation non limitatif, le symbole matriciel codé est réalisé en creux dans le flanc du pneumatique.

Cela améliore la protection du symbole matriciel codé contre l'usure provoquée, par exemple, par des râpages avec les trottoirs.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue en perspective d'une partie d'un pneumatique comportant un flanc dans lequel est disposé un symbole matriciel codé conforme à l'invention selon un premier mode de réalisation non limitatif ;
- la **figure 2** représente schématiquement une vue en perspective d'une partie d'un pneumatique comportant un flanc dans lequel est disposé un symbole matriciel codé conforme à l'invention selon un deuxième mode de réalisation non limitatif ;
- la **figure 3** représente schématiquement une vue en coupe du flanc du pneumatique de la **figure 2****,** dans lequel le symbole matriciel codé est encastré dans ledit flanc ;
- la **figure 4** représente un symbole matriciel codé du flanc de la **figure 1** selon un mode de réalisation non limitatif, le symbole matriciel codé comprenant des parties sombres et des parties claires, les parties sombres étant composées d'une texture particulière ;
- la **figure 5** représente l'espace occupé par le symbole matriciel codé de la **figure 3** sur le flanc du pneumatique ;
- la **figure 6** représente le symbole matriciel codé du flanc de la **figure 2** entouré d'une zone de texture ;
- la **figure 7** représente une partie de la texture composant des parties sombres du symbole matriciel codé de la **figure 4** **ou** **6**, selon un cinquième mode de réalisation non limitatif ;
- la **figure 8** représente une vue agrandie d'une cavité d'un élément en creux de la texture de la **figure 16** ;
- la **figure 9** est une représentation en perspective d'une pluralité d'éléments en creux d'un motif composant des parties claires du symbole matriciel codé de la **figure 4** **ou** **6** selon un premier mode de réalisation non limitatif ;
- la **figure 10** représente schématiquement une vue en coupe d'une partie du motif de la **figure 9** selon une première variante de réalisation non limitative ;
- la **figure 11** représente schématiquement une vue en coupe d'une partie du motif de la **figure 9** selon une deuxième variante de réalisation non limitative ;
- la **figure 12** représente schématiquement une vue en coupe d'éléments en creux d'un motif composant des parties claires du symbole matriciel codé de la **figure 4** **ou** **6** selon un deuxième mode de réalisation non limitatif ;
- la **figure 13** est une représentation en perspective d'une pluralité d'éléments en bosse d'un motif composant des parties claires du symbole matriciel codé de la **figure 4** **ou** **6** selon un premier mode de réalisation non limitatif ;
- la **figure 14** représente schématiquement une vue en coupe d'une partie du motif de la **figure 13** ;
- la **figure 15** représente schématiquement une vue en coupe d'éléments en bosse d'un motif composant des parties claires du symbole matriciel codé de la **figure 4** **ou** **6** selon un deuxième mode de réalisation non limitatif ;
- la **figure 16** est une représentation en perspective d'une pluralité d'éléments en creux et en bosse d'un motif composant des parties claires du symbole matriciel codé de la **figure 4** **ou** **6** selon un mode de réalisation non limitatif ; et
- la **figure 17** représente schématiquement une vue en coupe d'une partie du motif de la **figure 16****.**

Dans la description qui va suivre, des éléments sensiblement identiques ou similaires seront désignés par des références identiques.

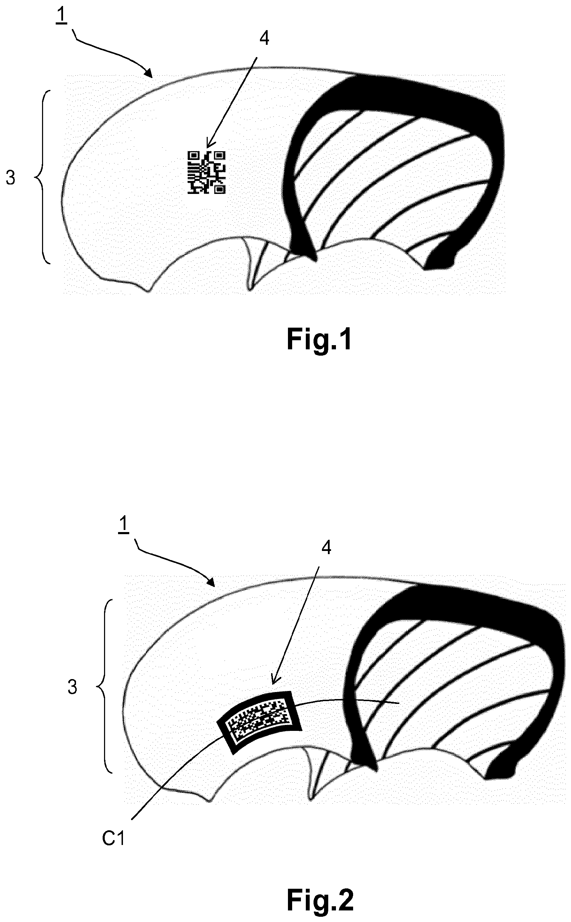

La **figure 1** illustre le flanc 3 d'un pneumatique 1, ledit flanc 3 comprenant un symbole matriciel codé 4.

Dans un mode de réalisation non limitatif, le symbole matriciel codé 4 est sélectionné parmi les symboles suivants :
- un QR code.
Bien entendu, d'autres symboles matriciels codés peuvent être utilisés.

Le symbole matriciel codé 4 permet d'encoder des informations telles que la marque du constructeur, le site internet du constructeur etc. Grâce à des moyens de lecture/décodage tels qu'un imageur intégré dans un exemple non limitatif dans un téléphone portable, un observateur du pneumatique va pouvoir lire et décoder le symbole matriciel codé 4 et accéder au site internet du constructeur, par exemple pour commander un nouveau pneumatique.

Tel qu'illustré sur la **figure 2****,** dans un mode de réalisation non limitatif, le symbole matriciel codé 4 suit la courbure C1 du flanc 3 de pneumatique 1, ladite courbure étant définie selon un parallèle par rapport à l'axe de rotation du pneumatique. Autrement dit, le symbole matriciel codé 4 est courbé autour de l'axe de rotation du pneumatique 1. Cela donne un aspect plus esthétique au pneumatique puisque le symbole matriciel codé 4 apparaît comme faisant partie intégrante du flanc 3.

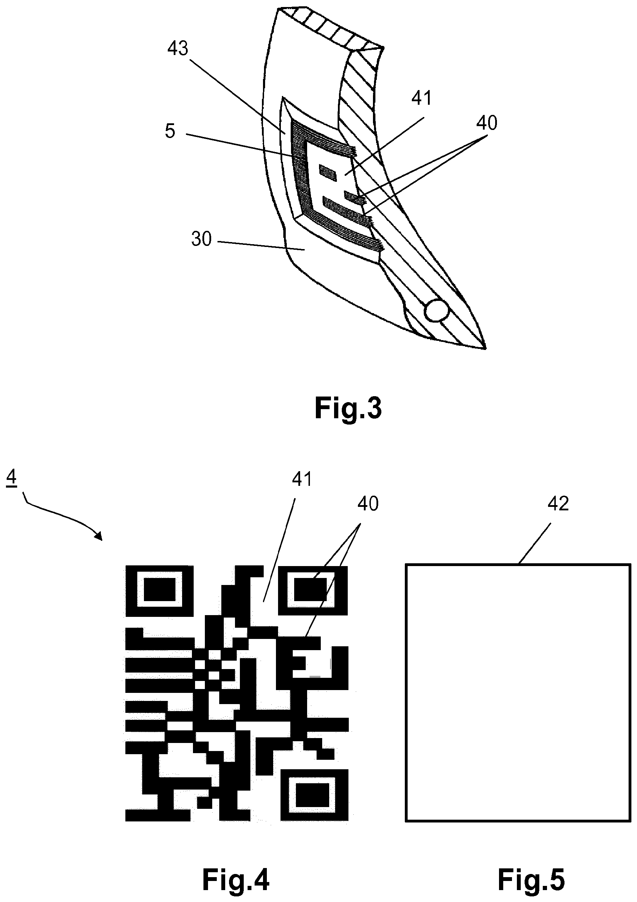

Dans un mode de réalisation non limitatif tel qu'illustré sur la vue en coupe de la **figure 3****,** le symbole matriciel codé 4 est réalisé en creux dans le flanc 3 du pneumatique. Le flanc 3 comporte un logement 43 dans lequel est encastré le symbole matriciel codé 4. Les parties sombres 40 (composées d'éléments en en creux 405 décrits plus loin dans la description) ainsi que les parties claires 41 (qu'elles soient composées d'éléments en bosse 414 ou en creux 411 décrits plus loin dans la description) s'étendent au-dessous de la surface 30 du flanc 3, ladite surface étant la surface supérieure du flanc. Ainsi, le fait que ces éléments ne remontent pas jusqu'au niveau de la surface 30 du flanc 3 permet d'avoir un symbole matriciel codé 4 plus robuste notamment lors de râpage trottoir. Par ailleurs, cela perturbe moins l'écoulement de l'air qui est ainsi plus fluide et qui suit donc mieux ladite surface 30 du flanc 3.

Sur la **figure 4** est représenté un premier mode de réalisation non limitatif de symbole matriciel codé 4. Comme on peut le voir sur la figure, le symbole matriciel codé 4 comporte des parties sombres 40 et des parties claires 41. De façon connue de l'homme du métier, dans un mode de réalisation non limitatif, les parties sombres 40 et claires 41 sont des cases sombres, respectivement des cases claires, une partie correspondant à une case. Le symbole matriciel codé 4 comporte ainsi des colonnes et des rangées de cases (ou carrés). Dans un mode de réalisation non limitatif, une case comporte une taille comprise entre 0,5x0,5mm à 2x2mm. Au-delà, le symbole matriciel codé 4 devient trop intrusif ou est bien trop miniaturisé et donc trop fragile pour être décodé en fin d'usure du pneumatique 1. Dans une variante de réalisation non limitative, une case comporte une taille de 1x1mm. Dans un autre mode de réalisation non limitatif, les parties sombres 40 et claires 41 sont des ronds sombres, respectivement des ronds clairs. Dans un autre mode de réalisation non limitatif, on peut avoir une combinaison de cases et de ronds. Le symbole matriciel codé 4 occupe un espace 42 sur le flanc 3 du pneumatique 1, illustré sur la **figure 5****.**

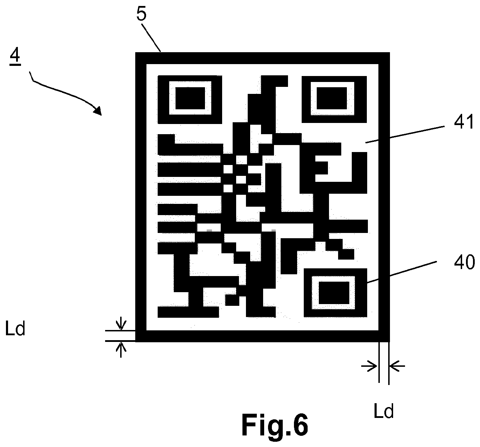

Sur la **figure 6** est représenté un deuxième mode de réalisation non limitatif de symbole matriciel codé 4. Comme on peut le voir sur la figure, outre les parties sombres 40 et les parties claires 41, le symbole matriciel codé 4 est entouré d'une zone de texture 5 d'au moins 2mm de largeur Ld venue de matière avec le flanc et faisant contraste avec le reste du pneumatique 1. Cette zone de délimitation 5 ne touche pas les zones sombres 40 du symbole matriciel codé 4. Elle est composée de la même texture de type « velours » (décrite dans la suite de la description) que les parties sombres 40, de sorte que la quantité de surface noire dans la zone de prise de vue autour du symbole matriciel codé 4 est augmentée.

Ainsi, en augmentant ainsi la quantité de surface noire, on augmente le contraste entre les régions claires et sombres du symbole matriciel 4 dans le traitement réalisé par le téléphone portable. On améliore par conséquent la lecture/décodage du symbole 4.

Les parties sombres 40 et les parties claires 41 du symbole matriciel codé 4 sont présentées dans la suite de la description selon des modes de réalisation non limitatifs.

Les parties sombres 40 du symbole matriciel codé 4 sont décrites ci-après.

Les parties sombres 40 sont composées d'une texture 400 venue de matière avec ledit flanc 3. La texture 400 fait contraste avec le reste du pneumatique 1 et notamment le reste du flanc 3 du pneumatique 1 de sorte que le symbole matriciel codé 4 soit bien visible sur le flanc 3 par un observateur du pneumatique.

La texture 400 formant les parties sombres 40 comporte une pluralité de premiers éléments en creux 405 par rapport à la surface 30 du flanc 3. Ces éléments 405 sont donc également en matière caoutchoutique. Autrement dit, une case sombre 40 comporte une pluralité d'éléments 405.

Les premiers éléments en creux 405 (appelés également trous) de la texture 400 sont présentés ci-après.

Les premiers éléments en creux 405 sont composés d'ouvertures 406 sur la surface 30 du flanc 3 et de cavités 407 associées s'étendant dans la profondeur de la surface 30 du flanc 3.

Ainsi, la texture 400 comprend une pluralité d'ouvertures 406 dans la surface 30 du flanc 3, lesdites ouvertures 406 étant réparties dans la texture 400 selon une densité au moins égale à une ouverture par millimètre carré (mm²) et présentant sur la surface 30 du flanc 3 des diamètres Dt équivalents compris entre 0,01 mm et 1,2 mm.

Dans un mode de réalisation non limitatif, les ouvertures 406 occupent au moins 30% de la texture. Selon d'autres modes de réalisation non limitatifs, les ouvertures 406 occupent au moins 50% de la texture, voire plus de 70%. On notera que plus le taux d'occupation des ouvertures sur la texture est important, meilleure est la qualité de contraste de cette texture et donc des parties sombres 40 du symbole matriciel codé 4 par rapport aux parties claires 41 et au reste du flanc 3.

Les ouvertures 406 se prolongent dans la profondeur de la surface 30 du flanc 3 pour former des cavités 407.

L'effet de ces cavités 407 est de « piéger » une grande quantité des rayons lumineux incidents qui rencontrent la texture, mais également d'offrir une plus grande pérennité de la texture. En effet, comme les cavités 407 sont en creux dans la surface 30 du flanc 3, l'impact des agressions mécaniques sur la texture, tels que des frottements d'une chaussée est plus faible que pour des protubérances. Dans ce mode de réalisation, la texture (appelée «velours ») permet d'obtenir un visuel de type « velours » car les cavités absorbent la lumière et rendent ainsi les parties sombres 40 du symbole matriciel codé 4 plus noires.

Dans un mode de réalisation non limitatif, tout ou partie des cavités 407 a une profondeur au moins égale à 0.1mm. Dans une variante de réalisation non limitative, tout ou partie des cavités 407 a une profondeur comprise entre 0.2 mm et 0.6 mm. De cette manière, on s'assure qu'une grande quantité de rayons lumineux incidents qui rencontre la texture est piégée par ladite texture 400.

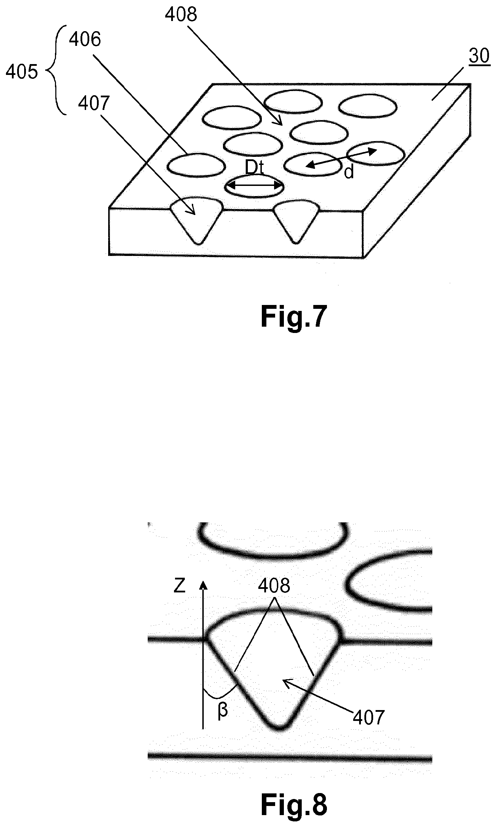

La **figure 7** illustre la texture 400 selon une variante de réalisation non limitative. Dans cette variante, tout ou partie des cavités 407 sont en forme de cônes qui s'étendent dans la profondeur de la surface 30 du flanc 3 et débouchent sur ladite surface en formant des ouvertures circulaires 406. Les cavités 407 ont ainsi une section qui diminue dans la profondeur de la surface 30 du flanc 3. De cette manière, on améliore le contraste de la texture 3 et donc du symbole matriciel codé 4 par rapport au reste du pneumatique 1 et plus particulièrement par rapport au reste du flanc 3. On notera que dans cette variante, les ouvertures 406 des cavités 407 ne se touchent pas. Les ouvertures 406 sont séparées par des zones intermédiaires 408. En outre, les ouvertures 406 sont régulièrement réparties dans la texture de sorte que la distance d entre chaque ouverture de la texture est globalement similaire.

La **figure 8** est un zoom sur une cavité 407 d'un élément en creux 405 de la texture 400. Dans un mode de réalisation non limitatif, tout ou partie des cavités a au moins une paroi 409 qui, selon une vue en coupe, forme un angle β compris entre 10° et 60° par rapport à une direction Z perpendiculaire à la texture.

A chaque fois qu'un rayon lumineux rencontre une paroi 409 de la cavité 407, celui-ci est réfléchi par ladite paroi 409. La direction de réflexion du rayon lumineux dépend de la direction initiale de ce rayon lumineux et de l'angle d'inclinaison de la paroi 409. Ainsi, en fonction de cette direction initiale et de cet angle d'inclinaison, le rayon lumineux peut être renvoyé vers une autre paroi 409 de la cavité. A l'inverse, le rayon lumineux peut être renvoyé à l'extérieur de la cavité, par exemple directement vers un observateur. Dans le premier cas, le rayon lumineux « se perd » dans la cavité et il ne sera plus perceptible par l'œil d'un observateur. Dans le second cas, l'observateur peut percevoir le rayon lumineux et la texture peut apparaître alors comme étant plus claire et donc moins en contraste vis-à-vis du reste du flanc. En choisissant une cavité 407 ayant au moins une paroi 409 qui forme un angle β compris entre 10° et 60°, on s'assure qu'une grande partie des rayons lumineux rentrant dans la cavité 407 va être absorbée par cette cavité sous l'effet de réflexions multiples à l'intérieur de la cavité. De cette manière, on améliore le contraste de la texture (et donc des parties sombres 40 du symbole matriciel codé 4) par rapport au reste du pneumatique 1 (notamment par rapport aux parties claires 41 et au reste du flanc 3), tout en conservant le même taux d'occupation des cavités dans la texture 400. En outre, avec cette inclinaison de paroi, on améliore globalement la résistance de la texture 400, notamment lors de frottements répétés avec la chaussée.

Dans un exemple non limitatif, les premiers éléments en creux 405 de la texture 400 sont directement fabriqués sur le pneumatique par gravure laser ou moulés par une partie d'un moule, ladite partie de moule ayant préalablement subi une opération de gravure laser du moule pour obtenir lesdits éléments 405.

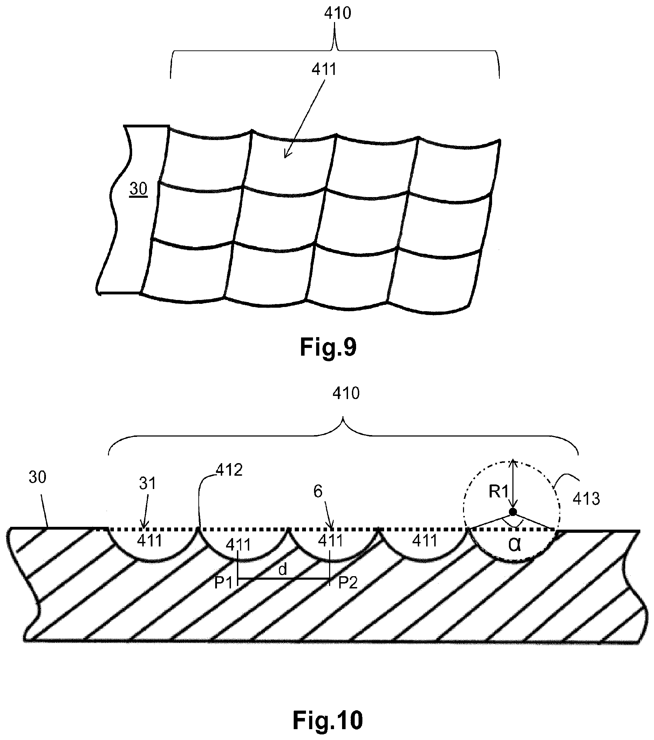

En référence aux **figures 9 à 17****,** les parties claires 41 du symbole matriciel codé 4 sont décrites ci-après.

Dans un mode de réalisation non conforme à l'invention, les parties claires 41 sont composées d'une partie de la surface 30 du flanc 3 qui n'a pas été recouverte par la texture 400 de type « velours » décrite précédemment, partie de la surface 30 du flanc délimitée par l'espace 42 occupé par le symbole matriciel codé 4. En effet, la surface 30 du flanc 3 est lisse et elle réfléchit la lumière. Un observateur du pneumatique va percevoir une couleur gris-blanc. Ainsi, les parties claires 41 seront en contraste par rapport aux parties sombres 40 décrites précédemment.

Dans un mode de réalisation conforme à l'invention, les parties claires 41 sont composées d'un motif 410 comprenant :
- une pluralité de deuxièmes éléments en creux 411 ; ou
- une pluralité de deuxièmes éléments en bosse 414 ; ou
- une combinaison de deuxièmes éléments en creux 411 et de deuxièmes éléments en bosse 414.
Autrement dit, une case claire 41 comporte une pluralité d'éléments 411 et/ou 414.
Cela permet de rendre encore plus claires les parties 41 que la surface lisse du flanc 3.
Le motif 410 est également venu de matière avec ledit flanc 3. Il est dans le même matériau caoutchoutique que le flanc du pneumatique. Les éléments 411 et 414 sont donc en matière caoutchoutique.

Les différents éléments 411 et 414, et leur combinaison sont décrits ci-dessous.

En référence aux **figures 9 à 12**, les deuxièmes éléments en creux 411 sont présentés ci-après.

La **figure 9** montre une vue agrandie en perspective d'une partie du motif 410 comprenant des deuxièmes éléments en creux 411 selon un premier mode de réalisation non limitatif. Les deuxièmes éléments en creux 411 ont tous la même forme. La forme est une surface ouverte. Dans le mode de réalisation non limitatif illustré à la **figure 9**, les deuxièmes éléments en creux 411 sont alignés les uns par rapport aux autres. Ceci permet de bien délimiter les parties claires 41.

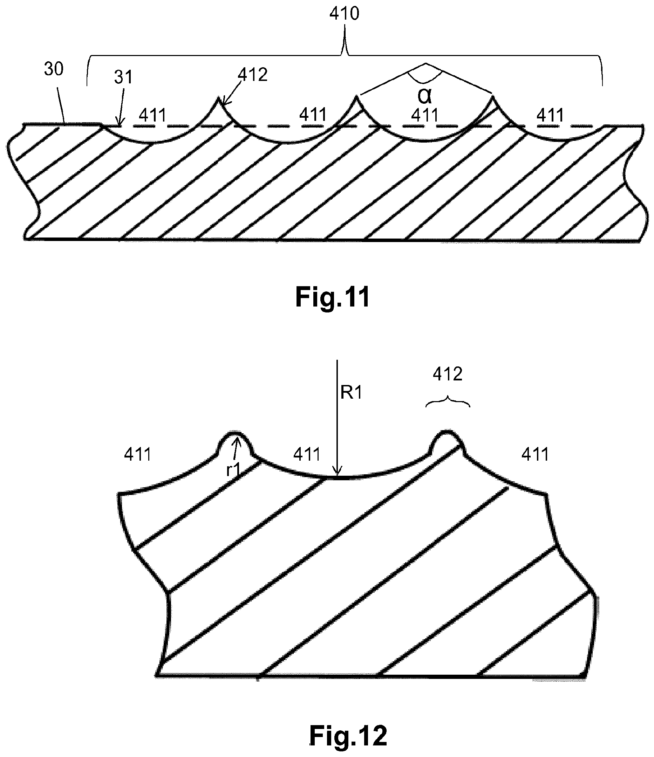

La **figure 10** et la **figure 11** montrent une vue en coupe d'une partie des deuxièmes éléments en creux 411 de la **figure 9****.** Un deuxième élément en creux 411 a la forme d'une partie de sphère. Il s'appuie sur une sphère 413 qui présente un premier rayon R1. En vue en coupe, la forme géométrique des deuxièmes éléments en creux 411 est concave. Chaque deuxième élément en creux 411 est adjacent avec un autre deuxième élément en creux 411. De plus, les deuxièmes éléments en creux 411 se raccordent entre eux au niveau de zones de raccordement 412.

La distance d (appelée également « pas ») entre le point équidistant P1 d'un élément en creux 411 et le point équidistant P2 d'un autre élément en creux adjacent est inférieure au diamètre de la sphère 413 sur lequel l'élément en creux s'appuie. Dans un mode de réalisation non limitatif, le pas d entre deux points équidistants adjacents P1-P2 de deux éléments en creux adjacents 411 est supérieur ou égal à 0,3mm et inférieur à 2mm. Ainsi, l'œil humain, à une distance supérieure à 2 mètres ne va percevoir qu'une texture du motif 410 de couleur uniforme. Dans un exemple de réalisation non limitatif, le pas d entre deux sommets adjacents P1-P2 est égal à 1mm. Cela facilite la mise en œuvre au niveau industriel des éléments en creux 411 et permet d'utiliser un outillage peu coûteux.

La **figure 10** présente une première variante de réalisation non limitative d'une disposition des éléments 411 par rapport à la surface du flanc 3, dans lequel les zones de raccordement 412 des deuxièmes éléments en creux 411 se situent au même niveau que la surface moyenne 31 du flanc 3 selon laquelle le flanc s'étend.

La **figure 11** présente une deuxième variante de réalisation non limitative d'une disposition des éléments 411 par rapport à la surface du flanc 3, dans lequel les zones de raccordement 412 des deuxièmes éléments en creux 411 s'étendent au-dessus du flanc. Plus particulièrement, les zones de raccordement 412 s'étendent au-dessus de la surface moyenne 31 selon laquelle le flanc s'étend.

La **figure 12** montre une vue agrandie en coupe d'une pluralité de deuxièmes éléments en creux 411 du motif 410 selon un deuxième mode de réalisation dans lequel les deuxièmes éléments en creux 411 se raccordent entre eux au niveau de zones de raccordement 412, ces zones de raccordement 412 étant courbes et présentant un rayon de raccordement r1, tel que r1≤ R1/3.

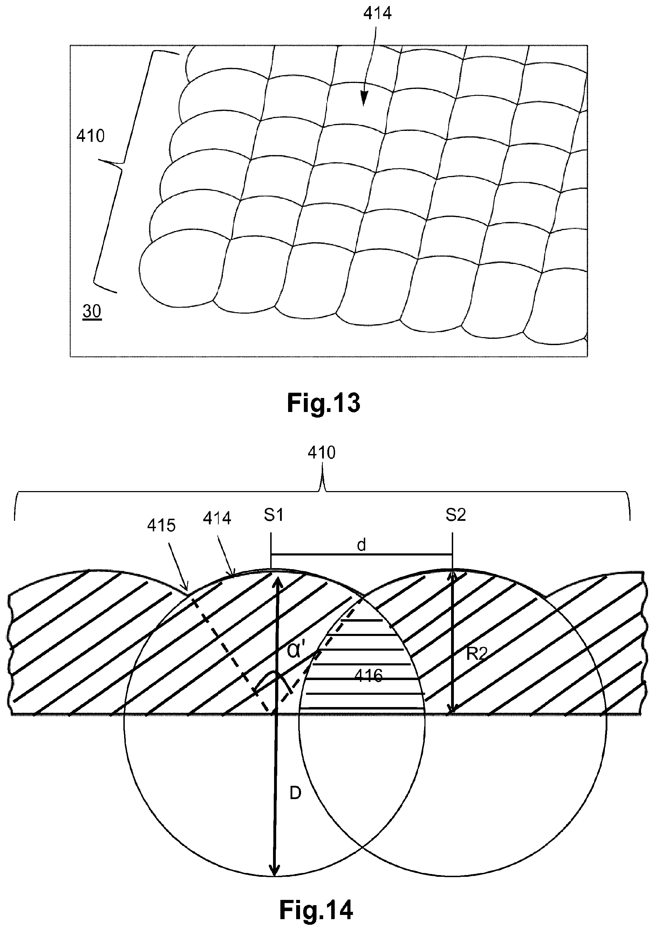

En référence aux **figures 13 à 15****,** les éléments en bosse 414 sont présentés ci-après.

La **figure 13** montre une vue agrandie en perspective d'une partie du motif 410 comprenant des deuxièmes éléments en bosse 414 selon un premier mode de réalisation non limitatif. Les deuxièmes éléments en bosse 414 ont tous la même forme. La forme est une surface fermée. La forme est une calotte sphérique de deuxième rayon R2, également appelée coque ou microlentille. On entend par calotte sphérique, une calotte dont le deuxième rayon R2 est constant. En variante, le deuxième rayon R2 des calottes peut être variable à plus ou moins 10%. Dans le mode de réalisation non limitatif illustré à la **figure 13****,** les éléments en bosse 414 sont alignés les uns par rapport aux autres. Ceci permet de bien délimiter les parties claires 41.

En vue en coupe **figure 14****,** la forme géométrique des éléments en bosse 414est ainsi convexe. Chaque calotte sphérique 414 est interpénétrée avec plusieurs éléments en bosse adjacents. Ainsi, comme illustré sur la **figure 14****,** la distance d (appelée également «pas ») entre le sommet SI d'une calotte sphérique et le sommet S2 d'une autre calotte sphérique adjacente est inférieure au diamètre D de cette calotte sphérique. Dans un mode de réalisation non limitatif, le pas d entre deux sommets S1-S2 est supérieur ou égal à 0,3mm et inférieur à 2mm. Ainsi, l'œil humain, à une distance supérieure à 2 mètres ne va percevoir qu'une texture du motif de couleur uniforme. Dans un exemple de réalisation non limitatif, le pas d entre deux sommets S1-S2 est égal à 1mm. Cela facilite la mise en œuvre au niveau industriel des calottes et permet d'utiliser un outillage peu coûteux.

Comme on peut le voir sur la **figure 14****,** les calottes sphériques 414 étant interpénétrées entre elles, elles présentent une zone commune 416 (illustrée par des hachures horizontales). On peut également voir que grâce à cette architecture de calottes sphériques interpénétrées, ces dernières présentent des espaces inter-calottes 415 limités, c'est-à-dire que ces espaces présentent une surface réduite.

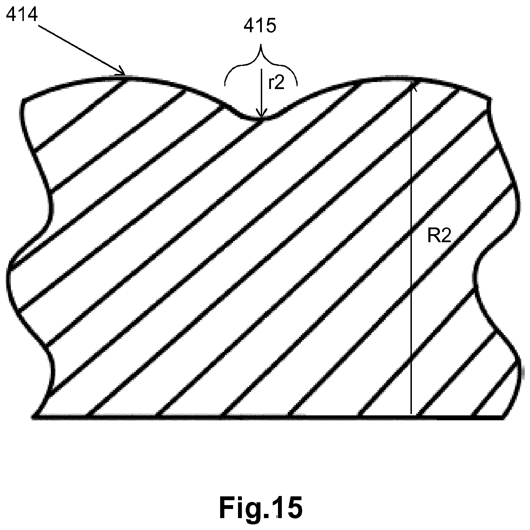

La **figure 15** présente un deuxième mode de réalisation non limitatif des éléments en bosse 414 dans lequel, lesdits éléments 414 se raccordent au niveau des espaces inter-calottes 415 appelées également zones de raccordement 415. Ces zones de raccordement 415 sont courbes et présentent un rayon de raccordement r2, tel que r2 ≤ R2/3. De cette manière, on limite les risques de propagation de fissures dans le motif 410, au niveau des zones de raccordement.

Afin d'améliorer davantage le renvoi de lumière par la texture (ce qui permet de faire apparaître les parties 41 du symbole matriciel codé 4 encore plus claires), on utilise les modes de réalisation non limitatifs suivants.

Dans un mode de réalisation non limitatif, les deuxièmes éléments en creux 411 comportent une ouverture angulaire α inférieure ou égale à 70° et les éléments en bosse 413 comportent une ouverture angulaire a' inférieure ou égale à 70°. Dans ce dernier cas, on réduit de façon optimum les espaces inter-calottes 415. Dans le cas où l'ouverture a, a' serait plus grande, cela entraînerait un risque d'absorption de lumière important.

Les rayons lumineux incidents sur les deuxièmes éléments en creux 411 et sur les calottes sphériques 414, sont réfléchis vers l'observateur. La lumière est peu absorbée par la texture du flanc 3 du pneumatique. Il n'y a donc pas de régions dites « noires ». L'ensemble des éléments en creux 411 et/ou en bosse 414 permettent de créer des régions dites « blanches » en raison de la réflexion optimisée de la lumière sur lesdits éléments, région correspondant aux parties claires 41 du symbole matriciel codé 4.

Dans un mode de réalisation non limitatif, les deuxièmes éléments en creux 411 et les calottes 414 présentent une texture qui se rapproche d'une surface lisse, réfléchissante, qui régularise l'intensité lumineuse moyenne renvoyée. Le paramètre écart-moyen arithmétique Ra représentatif de la rugosité de surface est très faible et est inférieur à 30µm. Les parties claires 41 comportent ainsi une rugosité de surface de paramètre Ra inférieur à 30 µm. La quantité de lumière renvoyée est ainsi maximisée.

Afin d'obtenir un procédé de fabrication facile à mettre en œuvre, dans un mode de réalisation non limitatif, la densité d'éléments en creux 411 et d'éléments en bosse 414 dans le motif 410 est supérieure ou égale à 0,2 éléments par mm². Dans un exemple non limitatif, les éléments en creux 411/en bosse 414 sont moulés par une partie d'un moule, ladite partie de moule ayant préalablement subi une opération de moletage pour le moulage des éléments en creux 411/en bosse 414.

Cela permet également de réaliser des éléments 411, 414 alignés dans les parties claires 41 selon au moins une direction préférentielle et ceci d'une manière simple et économique. Par ailleurs, cela permet de donner aux parties claires 41 un aspect plus uniforme vis-à-vis d'un observateur.

Ainsi, grâce à ces deuxièmes éléments en creux 411/en bosse 414, le symbole matriciel codé 4 comporte des parties 41 qui apparaissent plus claires pour un observateur du pneumatique 1 que les parties sombres 40 et donc bien distinctes par rapport à ces parties sombres 40. Cela facilite la lecture/décodage du symbole matriciel codé 4.

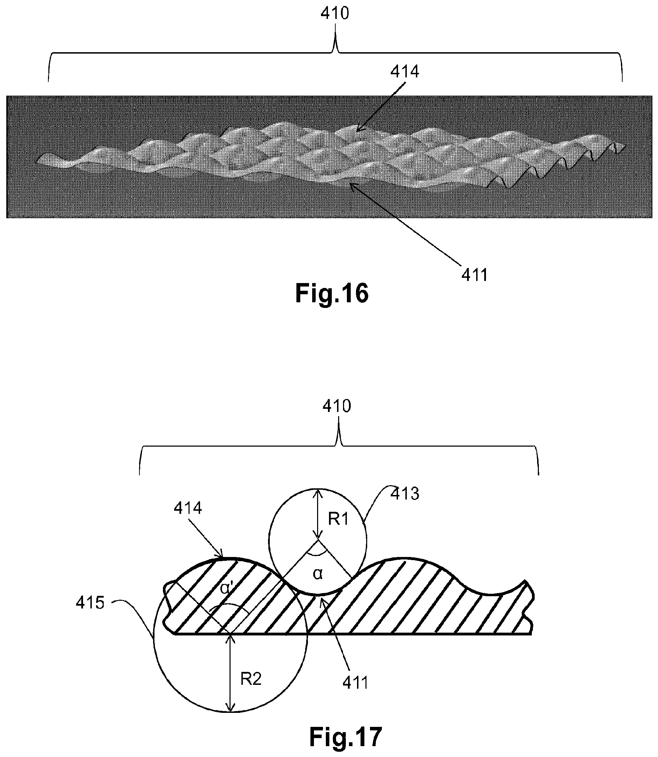

En référence aux **figures 16 et 17****,** la combinaison des deuxièmes éléments en creux 411 et des éléments en bosse 414 sont présentés ci-après.

Le motif 410 peut comporter une répétition de ces deux mêmes formes 411 et 414 qui sont alternées entre elles, un élément en creux 411 étant positionné en alternance avec un élément en bosse 414. On a un élément en creux 411 adjacent à deux éléments en bosse 414, et un élément en bosse 414 adjacent à deux éléments en creux 411. Ainsi, le motif 410 et par conséquent les parties claires 41 du symbole matriciel codé 4 présentent dans cette alternance une variation de courbure de type cosinus ou sinus tel qu'illustré sur la **figure 17****.**

Un tel motif 410 permet de masquer d'éventuelles déformations du flanc telles que des creux sur le flanc. De telles déformations sont notamment dues à des surplus de nappe carcasse, ladite nappe composant le pneumatique. Chaque élément en creux 411 et en bosse 414 a la propriété particulière de renvoyer une quantité de lumière qui reste constante, même lorsque le motif est incliné d'un faible angle par rapport à une position d'origine correspondant dans l'exemple à la position sur le flanc sans déformation. Dans un exemple non limitatif, l'inclinaison de l'angle est inférieure à 5°, ce qui correspond à l'inclinaison du renfoncement créé par la déformation flanc par rapport à la surface du flanc sans déformation. L'effet visuel créé par le creux n'est pratiquement plus visible voire plus du tout, quel que soit la position d'un observateur par rapport au flanc du pneumatique. L'ensemble du motif permet de créer une zone de réflexion lumineuse homogène en raison de la réflexion optimisée de la lumière sur ce motif 410.

Le deuxième rayon R2 est tel que 1/3 R1 < R2 < 3 R1. Dans une variante de réalisation non limitative, le deuxième rayon R2 est supérieur au premier rayon R1. Cette configuration permet en cas d'abrasion de protéger plus efficacement la partie en creux de premier rayon R1.

Dans un mode de réalisation non limitatif illustré à la **figure 16****,** dans le motif 410, les éléments en creux 411 sont alignés les uns par rapport aux autres et les éléments en bosse 414 sont alignés les uns par rapport aux autres. Autrement dit, les sommets des éléments en bosse 414 sont positionnés selon un maillage dont les axes se croisent à 90°. Ceci permet de bien délimiter les parties claires 41.

Dans un mode de réalisation non limitatif, vue en coupe passant par les sommets des éléments en bosse 414, l'ouverture angulaire a' desdits éléments 414 est égale à l'ouverture angulaire α des éléments en creux 411 tel qu'illustré sur la **figure 17****.** Cela permet d'avoir une continuité dans une partie claire 41 sans point anguleux entre un élément en creux 411 et un élément en bosse 414.

L'ensemble des éléments 411-414 permet de créer une zone de réflexion lumineuse homogène en raison de la réflexion optimisée de la lumière.

L'invention n'est pas limitée aux exemples décrits et représentés et diverses modifications peuvent y être apportées sans sortir de son cadre.

Ainsi, selon une autre variante de réalisation non limitative, les ouvertures 406 de la **figure 7** peuvent avoir la forme circulaire, carrée, ou encore polygonales (par exemple hexagonales) et les cavités 407 correspondantes une forme de cylindres, de parallélépipèdes, ou encore de polygones. Avec ces deux dernières structures (carrée ou polygonale), il est possible d'organiser plus facilement les ouvertures 406 les unes par rapport aux autres de sorte à limiter la surface des zones intermédiaires 408 entre ces ouvertures. Avec de telles formes d'ouvertures, on peut arriver plus aisément à des taux conséquents d'occupation des ouvertures.

Ainsi, selon une autre variante de réalisation non limitative, le motif 410 comprend des deuxièmes éléments en creux 411 ou en bosse 414 non alignés.

Ainsi, l'invention a été décrite avec un symbole matriciel codé. Cependant, dans un autre exemple de réalisation, le flanc 3 peut comporter plusieurs symboles matriciels codés.

Ainsi, selon une autre variante de réalisation non limitative, la réalisation du symbole matriciel codé peut être faite en deux étapes : une étape avant cuisson et une étape après cuisson. Les parties claires 41 sont moulées avec le pneumatique 1, donc avant cuisson, tandis que les parties sombres 40 sont réalisées sur le pneumatique cuit, donc en après cuisson. Les parties sombres 40 sont obtenues par gravure laser sur le pneumatique cuit.

L'invention décrite présente notamment les avantages suivants :
- la texture des parties sombres 41 du symbole matriciel codé 4 (avec des premiers éléments en creux) permet d'absorber la lumière et donc de donner un aspect plus noir aux parties sombres. On améliore ainsi le contraste des parties sombres 40 par rapport :
- au reste du flanc 3 du pneumatique, ce qui permet de bien distinguer le symbole matriciel codé 4 sur le flanc 3 ;
- aux parties claires 41, ce qui permet de bien distinguer les parties sombres des parties claires, et donc de faciliter la lecture/décodage du symbole matriciel codé. Les erreurs de lecture/décodage par un imageur sont ainsi réduites.
- grâce à la composition du symbole matriciel codé 4 avec une texture type « velours » pour les parties sombres 40 et avec des deuxièmes éléments en creux/en bosse pour les parties claires 41, la fabrication du symbole matriciel codé 4 peut être intégré lors de la fabrication du pneumatique 1 au moyen d'un moule intégré, et non pas après la fabrication du pneumatique. La réalisation est ainsi simplifiée et le coût est réduit.
- la texture de type « velours » des parties sombres 41 permet :
   - au symbole matriciel codé 4 d'avoir une texture agréable au toucher ;
   - d'obtenir un symbole matriciel codé 4 robuste et qui ne se déforme pas. Le symbole matriciel codé 4 s'use beaucoup moins qu'un symbole matriciel gravé Le décodage du symbole 4 sera toujours efficace même après usure du pneumatique ;
- la zone de texture 5 entourant le symbole matriciel codé 4 permet de bien cibler l'emplacement du symbole 4 et donc des données à décoder. Le traitement du symbole 4 est ainsi facilité.
- la composition (avec les deuxièmes éléments en creux/en bosse) des parties claires 41 du symbole matriciel codé 4 permet également d'améliorer leur contraste vis-à-vis des parties sombres 40.

## Revendications

1. Pneumatique (1) en matériau caoutchoutique comprenant un flanc (3), le flanc (3) comportant un symbole matriciel codé (4), ledit symbole matriciel codé (4) comprenant des parties sombres (40) et des parties claires (41), **caractérisé en ce que** les parties sombres (40) sont composées d'une texture (400) venue de matière avec ledit flanc (3) et faisant contraste avec le reste du pneumatique (1), ladite texture étant un agencement organisé d'une pluralité d'éléments (401, 402, 403, 404, 405, 411, 414), **en ce que** la texture (400) comporte une pluralité de premiers éléments en creux (405) par rapport à la surface du flanc (3), **en ce que** les premiers éléments en creux (405) forment des ouvertures (406) sur la surface (30) du flanc (3), les ouvertures (406) se prolongeant dans la profondeur de la surface (30) du flanc (3) pour former des cavités (407), tout ou partie des cavités (407) ayant une profondeur au moins égale à 0,1 mm, **en ce que** la texture (400) comprend une pluralité d'ouvertures (406), ces ouvertures étant réparties selon une densité au moins égale à une ouverture par millimètre carré (mm²), ces ouvertures présentant des diamètres équivalents compris entre 0,01 mm et 1,2 mm et **en ce que** les parties claires (41) du symbole matriciel codé (4) sont composées d'un motif (410) comprenant une pluralité de deuxièmes éléments en creux (411) et/ou en bosse (414), chaque élément en creux (411) et/ou bosse (414) ayant la forme d'une partie de sphère.

2. Pneumatique (1) selon la revendication 1, **caractérisé en ce que** le symbole matriciel codé (4) est un QR code.

3. Pneumatique (1) selon l'une des revendications 1 ou 2, **caractérisé en ce que** les deuxièmes éléments en creux (411) se raccordent entre eux au niveau de zones de raccordement (412) qui s'étendent au-dessus de la surface moyenne du flanc (3).

4. Pneumatique (1) selon l'une quelconque des revendications 1 à 3, **caractérisé en ce que,** vue en coupe, tout ou partie des deuxièmes éléments en creux (411) / en bosse (414) comporte une ouverture angulaire (α, α') inférieure ou égale à 70°.

5. Pneumatique (1) selon l'une quelconque des revendications 1 à 4, **caractérisé en ce que** les parties claires (41) du symbole matriciel codé (4) comportent une rugosité de surface de paramètre Ra inférieur à 30 µm.

6. Pneumatique (1) selon l'une quelconque des revendications 1 à 5, **caractérisé en ce que** le symbole matriciel codé (4) est entouré d'une zone (5) de texture d'au moins 2 mm de largeur (Ld) venue de matière avec le flanc (3) et faisant contraste avec le reste du pneumatique (1).

7. Pneumatique (1) selon l'une quelconque des revendications 1 à 6, **caractérisé en ce que** le symbole matriciel codé (4) suit une courbure (C1) du flanc (3) du pneumatique (1), ladite courbure étant définie selon un parallèle par rapport à l'axe de rotation du pneumatique, le symbole matriciel codé (4) étant courbé autour de l'axe de rotation dudit pneumatique (1).

8. Pneumatique selon l'une quelconque des revendications 1 à 7, **caractérisé en ce que** le symbole matriciel codé (4) est réalisé en creux dans le flanc (3) du pneumatique (1).

9. Pneumatique selon l'une quelconque des revendications 1 à 8, **caractérisé en ce que** tout ou partie des cavités (407) sont en forme de cônes qui s'étendent dans la profondeur de la surface (30) du flanc (3) et débouchent sur ladite surface en formant des ouvertures circulaires (406).

10. Pneumatique selon la revendication 9, **caractérisé en ce que** les ouvertures (406) sont régulièrement réparties dans la texture.

11. Pneumatique selon l'une quelconque des revendications 1 à 10, **caractérisé en ce que** tout ou partie des cavités (407) a au moins une paroi (409), qui, selon une vue en coupe, forme un angle β compris entre 10° et 60° par rapport à une direction Z perpendiculaire à la texture.

## Patentansprüche

1. Reifen (1) aus Kautschukmaterial mit einer Flanke (3), wobei die Flanke (3) ein codiertes Matrixsymbol (4) umfasst, wobei das codierte Matrixsymbol (4) dunkle Teile (40) und helle Teile (41) umfasst, **dadurch gekennzeichnet, dass** die dunklen Teile (40) aus einer mit der Flanke (3) einstückig ausgebildeten Struktur (400) gebildet werden und mit dem Rest des Reifens (1) kontrastieren, wobei die Struktur eine organisierte Anordnung einer Vielzahl von Elementen (401, 402, 403, 404, 405, 411, 414) ist, dass die Struktur (400) eine Vielzahl von ersten vertieften Elementen (405) in Bezug auf die Oberfläche der Flanke (3) umfasst, dass die ersten vertieften Elemente (405) Öffnungen (406) an der Oberfläche (30) der Flanke (3) bilden, wobei sich die Öffnungen (406) in der Tiefe der Oberfläche (30) der Flanke (3) verlängern, um Hohlräume (407) zu bilden, wobei alle oder ein Teil der Hohlräume (407) eine Tiefe von mindestens 0,1 mm haben, dass die Struktur (400) eine Vielzahl von Öffnungen (406) umfasst, wobei diese Öffnungen mit einer Dichte von mindestens einer Öffnung je Quadratmillimeter (mm²) verteilt sind, wobei diese Öffnungen äquivalente Durchmesser zwischen 0,01 mmm und 1,2 mm aufweisen, und dass die hellen Teile (41) des codierten Matrixsymbols (4) aus einem Muster (410) gebildet werden, das eine Vielzahl von zweiten vertieften Elementen (411) und/oder erhabenen Elementen (414) umfasst, wobei jedes vertiefte Element (411) und/oder erhabene Element (414) die Form eines Kugelsegments hat.

2. Reifen (1) nach Anspruch 1, **dadurch gekennzeichnet, dass** das codierte Matrixsymbol (4) ein QR-Code ist.

3. Reifen (1) nach einem der Ansprüche 1 oder 2, **dadurch gekennzeichnet, dass** die zweiten vertieften Elemente (411) an Übergangsbereichen (412), die sich oberhalb der mittleren Oberfläche der Flanke (3) erstrecken, ineinander übergehen.

4. Reifen (1) nach einem der Ansprüche 1 bis 3, **dadurch gekennzeichnet, dass**, im Schnitt gesehen, alle oder ein Teil der zweiten vertieften Elemente (411)/erhabenen Elemente (414) eine Winkelöffnung (α, α') von höchstens 70° besitzen.

5. Reifen (1) nach einem der Ansprüche 1 bis 4, **dadurch gekennzeichnet, dass** die hellen Teile (41) des codierten Matrixsymbols (4) eine Oberflächenrauheit mit dem Parameter Ra von weniger als 30 µm besitzen.

6. Reifen (1) nach einem der Ansprüche 1 bis 5, **dadurch gekennzeichnet, dass** das codierte Matrixsymbol (4) von einem mit der Flanke (3) einstückig ausgebildeten Strukturbereich (5) mit einer Breite (Ld) von mindestens 2 mm umgeben ist, der mit dem Rest des Reifens (1) kontrastiert.

7. Reifen (1) nach einem der Ansprüche 1 bis 6, **dadurch gekennzeichnet, dass** das codierte Matrixsymbol (4) einer Krümmung (C1) der Flanke (3) des Reifens (1) folgt, wobei die Krümmung entlang einer Parallele in Bezug auf die Drehachse des Reifens definiert ist, wobei das codierte Matrixsymbol (4) um die Drehachse des Reifens (1) gekrümmt ist.

8. Reifen nach einem der Ansprüche 1 bis 7, **dadurch gekennzeichnet, dass** das codierte Matrixsymbol (4) vertieft in der Flanke (3) des Reifens (1) ausgeführt ist.

9. Reifen nach einem der Ansprüche 1 bis 8, **dadurch gekennzeichnet, dass** alle oder ein Teil der Hohlräume (407) die Form von Kegeln haben, die sich von der Oberfläche (30) der Flanke (3) aus in die Tiefe erstrecken und an der Oberfläche münden, wobei sie kreisförmige Öffnungen (406) bilden.

10. Reifen nach Anspruch 9, **dadurch gekennzeichnet, dass** die Öffnungen (406) regelmäßig in der Struktur verteilt sind.

11. Reifen nach einem der Ansprüche 1 bis 10, **dadurch gekennzeichnet, dass** alle oder ein Teil der Hohlräume (407) mindestens eine Wand (409) haben, die gemäß einer Schnittansicht einen Winkel β zwischen 10° und 60° in Bezug auf eine senkrecht zu der Struktur verlaufende Richtung Z bildet.

## Claims

1. Tyre (1) made of rubbery material comprising a sidewall (3), the sidewall (3) comprising a coded matrix symbol (4), the said coded matrix symbol (4) comprising dark parts (40) and light parts (41), **characterized in that** the dark parts (40) are made up of a texture (400) formed as an integral part of the said sidewall (3) and contrasting against the rest of the tyre (1), the said texture being an organized arrangement of a plurality of elements (401, 402, 403, 404, 405, 411, 414), **in that** the texture (400) comprises a plurality of first recessed elements (405) set back from the surface of the sidewall (3), **in that** the first recessed elements (405) form openings (406) on the surface (30) of the sidewall (3), the openings (406) extending into the depth of the surface (30) of the sidewall (3) to form cavities (407), all or some of the cavities (407) having a depth at least equal to 0.1 mm, **in that** the texture (400) comprises a plurality of openings (406), these openings being distributed at a density at least equal to one opening per square millimetre (mm²), these openings having equivalent diameters of between 0.01 mm and 1.2 mm, and **in that** the light parts (41) of the coded matrix symbol (4) are made up of a pattern (410) comprising a plurality of second recessed elements (411) and/or boss elements (414), each recessed element (411) and/or boss element (414) having the shape of part of a sphere.

2. Tyre (1) according to Claim 1, **characterized in that** the coded matrix symbol (4) is a QR code.

3. Tyre (1) according to one of Claims 1 and 2, **characterized in that** the second recessed elements (411) are connected to one another at connection zones (412) which extend above the mean surface of the sidewall (3).

4. Tyre (1) according to any one of Claims 1 to 3, **characterized in that**, when viewed in cross section, all or some of the second recessed elements (411)/boss elements (414) have an angular extent (α, α') less than or equal to 70°.

5. Tyre (1) according to any one of Claims 1 to 4, **characterized in that** the light parts (41) of the coded matrix symbol (4) comprise a surface roughness of parameter Ra less than 30 µm.

6. Tyre (1) according to any one of Claims 1 to 5, **characterized in that** the coded matrix symbol (4) is surrounded by a textured zone (5) at least 2 mm in width (Ld) formed integrally with the sidewall (3) and contrasting with the rest of the tyre (1).

7. Tyre (1) according to any one of Claims 1 to 6, **characterized in that** the coded matrix symbol (4) follows a curvature (C1) of the sidewall (3) of the tyre (1), the said curvature being defined along a parallel with respect to the axis of rotation of the tyre, the coded matrix symbol (4) being curved about the axis of rotation of the said tyre (1).

8. Tyre according to any one of Claims 1 to 7, **characterized in that** the coded matrix symbol (4) is set back into the sidewall (3) of the tyre (1).

9. Tyre according to any one of Claims 1 to 8, **characterized in that** all or some of the cavities (407) are shaped as cones which extend into the depth of the surface (30) of the sidewall (3) and open onto the said surface forming circular openings (406).

10. Tyre according to Claim 9, **characterized in that** the openings (406) are evenly distributed through the texture.

11. Tyre according to any one of Claims 1 to 10, **characterized in that** all or some of the cavities (407) have at least one wall (409) which, in cross section, forms an angle β of between 10° and 60° with respect to a direction Z perpendicular to the texture.
